# EUROPÄISCHE PATENTSCHRIFT

(11) **EP 4 551 833 B1**
(45) Veröffentlichungstag und Bekanntmachung des Hinweises auf die Patenterteilung: **18.03.2026**
(21) Anmeldenummer: 23704867.3
(22) Anmeldetag: 31.01.2023
(51) Int. Cl.: F16C 19/16, F16C 33/60, F16C 33/58, F16C 33/62, F16C 33/30

(54) **DÜNNRINGLAGER UND COMPUTERTOMOGRAPH MIT EINEM SOLCHEN DÜNNRINGLAGER**
THIN-RING BEARING AND COMPUTED TOMOGRAPHY UNIT WITH SUCH A THIN-RING BEARING
ROULEMENT À SECTION MINCE ET TOMODENSITOMÈTRE DOTÉ D'UN TEL ROULEMENT À SECTION MINCE

(30) Priorität: 08.07.2022 DE 102022117033
(43) Veröffentlichungstag der Anmeldung: 14.05.2025
(73) Patentinhaber: Schaeffler Technologies AG & Co. KG, 91074 Herzogenaurach (DE)
(72) Erfinder: BRAUN, Wolfgang, 97493 Garstadt (DE); PAUSCH, Michael, 97456 Dittelbrunn (DE); RUDY, Dietmar, 66501 Kleinbundenbach (DE); MERKLEIN, Carsten, 90491 Nürnberg (DE)
(74) Vertreter: Schaeffler Technologies
(86) Internationale Anmeldenummer: PCT/DE2023/100072
(87) Internationale Veröffentlichungsnummer: WO 2024/008225

(56) Entgegenhaltungen:
- DE-A1- 102009 018 822
- DE-A1- 102010 006 423
- DE-A1- 102013 221 687
- DE-A1- 102014 208 138
- DE-A1- 102017 115 803
- DE-B3- 10 333 542
- US-A1- 2020 166 080

## Beschreibung

Die Erfindung betrifft ein Dünnringlager umfassend mindestens einen Außenring, mindestens einen Innenring und eine Mehrzahl kugelförmiger Wälzkörper, wobei der mindestens eine Innenring mit einem Innendurchmesser von größer als 700 mm ausgebildet ist, insbesondere für den Einsatz in einem Computertomographen.

Die DE 102009056038 A1 beschreibt ein Dünnringlager und ein Verfahren zur Herstellung eines Lagerringes aus drahtförmigem Material für ein Dünnringlager.

Als Dünnringlager werden Wälzlager bezeichnet, die einen großen Innendurchmesser Dᵢ des Innenringes im Verhältnis zum Abstand A zwischen Innendurchmesser und Außendurchmesser des Lagers (im Querschnitt gesehen) aufweist. Insbesondere beträgt das Verhältnis von A/Dᵢ = 1:30 bis 1:150.

Die DE 10 2017 222 208 B3 offenbart ein Computertomographiegerät und ein Verfahren zur Anordnung eines Lagerringes eines Wälzlagers. Das Wälzlager ist als Dreipunkt-Kugellager ausgebildet und weist einen Lagerring mit einem Rillenprofil, einen ersten Drahtring und einen zweiten Drahtring auf. Derartige Computertomographiegeräte weisen typischerweise einen stationären Teil und einen rotierenden Teil auf, wobei der rotierende Teil eine Strahlungsquelle für Röntgenstrahlung und einen Detektor für die Röntgenstrahlung, welcher mit der Strahlungsquelle zusammenwirkt, aufweist. Der rotierende Teil kann eine Masse von etwa 600 bis 900 kg aufweisen und mit einer Umdrehungsgeschwindigkeit von etwa 60 bis 240 Umdrehungen pro Minute rotieren. Für die Drehlagerung des rotierenden Teils relativ zu dem stationären Teil kann ein Wälzlager verwendet werden.

Dabei ist eine hohe Laufgenauigkeit, extreme Laufruhe, Spielfreiheit und hohe Kippsteifigkeit wesentlich, um qualitativ hochwertige Bilder zu erzeugen. Dazu werden bisher Lagerringe aus hochreinen und damit teuren Stahlqualitäten eingesetzt.

Die US 2020 0 166 080 A1 beschreibt eine Lagerkomponente umfassend einen metallischen Grundkörper und eine, auf diesen mittels Auftragsschweißen aufgebrachte Beschichtung. Der Grundkörper ist insbesondere aus unlegiertem Stahl oder Gusseisen gebildet, während die Beschichtung aus legiertem Stahl gebildet ist.

Die DE 10 2009 018 822 A1 beschreibt ein Wälzlager umfassend eine innere Laufschale und eine äußere Laufschale aus Hartmetall, welche auf ihrer den Wälzkörpern abgewandten Seite jeweils über eine Hartlotschicht mit einem Stützring verbunden sind.

Die DE 10 2010 006 423 A1 offenbart ein Wälzlager mit Lagerringen, die einen metallischen Grundkörper aufweisen, der mit keramischen Laufflächen verklebt, verlötet oder verschraubt ist.

Die DE 103 33 542 B2 beschreibt eine Drehlageranordnung eines Großlagers, insbesondere für eine Tomographiegerät. In ein erstes und/oder ein zweites Bauelement der Drehlageranordnung ist eine Kontur eingeprägt, auf die eine oder mehrere hochfeste Lagen auftragsgeschweißt sind und welche zur Bildung einer rotationssymmetrischen Lauffläche für Wälzkörper bearbeitet sind.

Es ist Aufgabe der Erfindung, ein geeignetes Dünnringlager bereitzustellen, das eine signifikante Kosteneinsparung hinsichtlich seiner Herstellung mit sich bringt.

Die Aufgabe wird durch ein Dünnringlager gemäß Anspruch 1 gelöst. Das Dünnringlager umfasst mindestens einen Außenring, mindestens einen Innenring und eine Mehrzahl kugelförmiger Wälzkörper, wobei der mindestens eine Innenring mit einem Innendurchmesser von größer als 700 mm ausgebildet ist. Der Innendurchmesser des mindestens einen Innenringes weist im Verhältnis zu einem Abstand A zwischen dem Innendurchmesser und einem Außendurchmesser des Dünnringlagers, in einem Querschnitt in axialer Richtung des Dünnringlagers gesehen, ein Verhältnis von A/Dᵢ = 1:30 bis 1:150 auf. Der mindestens eine Innenring und der mindestens eine Außenring sind aus einem ungehärteten metallischen Grundwerkstoff mit einer Härte kleiner 60 HRC gebildet, wobei der mindestens eine Innenring und der mindestens eine Außenring jeweils eine Laufbahnaufnahmefläche ausbilden. Der Grundwerkstoff ist im Bereich der Laufbahnaufnahmeflächen zumindest partiell mit einer Funktionsschicht in einer Funktionsschichtdicke im Bereich von 0,5 bis 3 mm belegt, wobei die Funktionsschicht aus einem metallischen Funktionsschichtmaterial mit einer Härte von mindestens 60 HRC gebildet ist.

Die Funktionsschichtdicke der Funktionsschicht ist erfindungsgemäß in dem Querschnitt gesehen in einer Richtung senkrecht zu der Laufbahnaufnahmefläche unterschiedlich ausgebildet, derart, dass die Funktionsschicht die Laufbahnaufnahmefläche nicht vollständig bedeckt und die Funktionsschichtdicke der Funktionsschicht in der Richtung senkrecht zu der Laufbahnaufnahmefläche zu ihren Randbereichen hin abnimmt.

Somit kann lediglich die Funktionsschicht durch ein hochwertiges, sehr reines und überrollfestes Funktionsschichtmaterial hoher Härte ausgebildet werden. Da das Funktionsschichtmaterial separat und in geringer Funktionsschichtdicke aufgebracht werden kann, reduzieren sich die Material-bedingten Herstellkosten für die Lagerringe signifikant. Dabei ist die Funktionsschichtdicke der Funktionsschicht entsprechend einer mindestens notwendigen Einhärtetiefe am jeweiligen Ring ausgewählt, damit ein funktionsfähiges, belastbares Bauteil entsteht. Der Grundwerkstoff, auf den die Funktionsschicht aufgebracht wird, muss nicht mehr die hohe geforderte Reinheit aufweisen. Spannungen und Verzug können zudem minimiert werden, ohne den gesamten Lagerring einer Wärmebehandlung unterziehen zu müssen.

Der metallische Grundwerkstoff ist bevorzugt aus Stahl gebildet. Der metallische Grundwerkstoff wird insbesondere aus Wälzlagerstahl, Vergütungsstahl oder Einsatzstahl ausgewählt. Beispielsweise wird ein schweißbarer Vergütungsstahl mit einem Kohlenstoffgehalt von kleiner als 0,3 Gew.-% verwendet. Alternativ kann auch Aluminium als metallischer Grundwerkstoff eingesetzt werden.

Bei dem metallischen Funktionsschichtmaterial handelt es sich bevorzugt um einen Stahl mit einem Anteil von
0 bis 10 Gew.-% Mo,
0 bis 19 Gew.-& W,
0 bis 5 Gew.-% V,
3,5 bis 5 Gew.-% Cr,
0 - 11 Gew.-% Co,
0,75 bis 1,2 Gew.-% C,
Rest Eisen und unvermeidbare Verunreinigungen oder weitere Elemente, wie Mn, Si, Cu, Ni, P, S, mit einem Anteil von kleiner als 0,5 Gew.-%.

Insbesondere wird Stahl der Sorte 1.3344 (X 130 WMoCrV 6-5-4-3) eingesetzt. Bevorzugt sind pulvermetallurgische Schnellarbeitsstähle hoher Härte.

Alternativ handelt es sich bei dem metallische Funktionsschichtmaterial vorzugsweise um ein Hartmetall auf Basis von Wolframkarbid in einer Nickel-Bindematrix, am Markt auch bekannt unter der Bezeichnung "Cermadur"

Besonders bevorzugt ist hier eine Kombination eines metallischen Grundwerkstoffs in Form von Vergütungsstahl mit einem Kohlenstoffgehalt von kleiner als 0,3 Gew.-% mit einem Funktionsschichtmaterial aus Stahl der Sorte 1.3344.

Die Funktionsschicht ist insbesondere durch Laserauftragsschweißen auf den Grundwerkstoff aufgebracht. Dadurch ergibt sich im Übergangsbereich zwischen dem Grundwerkstoff und der Funktionsschicht eine wellige Struktur, die im Schliffbild erkennbar ist und durch die Prozessparameter beim Laserauftragsschweißen beeinflussbar ist. Die dabei entstehende Wärmeeinflusszone erstreckt sich in den Grundwerkstoff hinein, wobei die Welligkeit sich über einen Bereich erstreckt, der dem gemessenen Abstand Z zwischen einem Mittelwert der Wellenspitzen und einem Mittelwert der Wellentäler entspricht, wobei dieser Abstand Z mindestens 50 µm beträgt. Dies gewährleistet eine besonders innige und porenfreie Verbindung zwischen dem Grundwerkstoff und der Funktionsschicht. Die Welligkeit und Ausdehnung der Wärmeeinflusszone ist dabei von den Auftragsparametern, wie Leistung, Auftragsgeschwindigkeit und Auftragsbreite, abhängig.

Eine freie Oberfläche der Funktionsschicht, welche die Laufbahn für die Wälzkörper ausbildet, ist vorzugsweise spanabhebend nachbearbeitet und/oder rolliert. Dadurch werden die Ebenheit und Oberflächenrauhigkeit der freien Oberfläche der Funktionsschicht und damit der Laufbahnen den Anforderungen in der Anwendung der Wälzlagerbauteile angepasst. Insbesondere wird die freie Oberfläche der Funktionsschicht geschliffen und gehont.

Der mindestens eine Außenring und/oder mindestens eine Innenring kann weiterhin wärmebehandelt sein, um eine Spannungsoptimierung am Ring und zudem Härtesteigerung des Funktionsschichtmaterials zu erreichen. Insbesondere erfolgt eine Wärmebehandlung in einem Temperaturbereich von 400°C bis kleiner 600°C über 1 bis 2 Stunden. Anschließend erfolgt eine Abkühlung des mindestens eine Außenrings und/oder mindestens einen Innenrings auf Raumtemperatur. Im Falle einer hier besonders bevorzugten Kombination eines metallischen Grundwerkstoffs in Form von Vergütungsstahl mit einem Kohlenstoffgehalt von kleiner als 0,3 Gew.-% mit einem Funktionsschichtmaterial aus Stahl der Sorte 1.3344 wird diese Wärmebehandlung bevorzugt in einem Temperaturbereich von 500°C bis kleiner 600°C vorgenommen.

Die Laufbahnaufnahmeflächen sind bevorzugt lediglich in einem Kontaktbereich zu den Wälzkörpern mit der Funktionsschicht belegt. Dies spart Funktionsschichtmaterial ein und senkt die Kosten eines Lagerringes weiter ab.

Die Funktionsschichtdicke ist zudem über den Querschnitt einer Laufbahnaufnahmefläche gesehen unterschiedlich ausgebildet, was die Kosten weiter senkt.

Es ist bevorzugt, wenn zwei Außenringe und/oder zwei Innenringe vorhanden sind. Dies erleichtert eine Montage des Dünnringlagers am Einsatzort beträchtlich.

Das Dünnringlager ist insbesondere mit einem quadratischen oder überwiegend quadratischen Querschnitt ausgebildet. Bevorzugt ist das Dünnringlager als ein Rillenkugellager, ein Vierpunktlager oder ein Schrägkugellager ausgebildet.

Ein Computertomograph, umfassend mindestens ein erfindungsgemäßes Dünnringlager, hat sich bewährt. Hinsichtlich einer möglichen Ausgestaltung eines Computertomographen wird auf die eingangs genannte DE 10 2017 222 208 B3 verwiesen.

Die Figuren 1 bis 3 sollen ein erfindungsgemäßes Dünnringlager beispielhaft erläutern. So zeigt:
- Figur 1: einen Schnitt durch ein Dünnringlager,
- Figur 2: einen vergrößerten Ausschnitt aus Figur 1, und
- Figur 3: ein Schliffbild eines Schnitts durch die Funktionsschicht und den angrenzenden Grundwerkstoff.

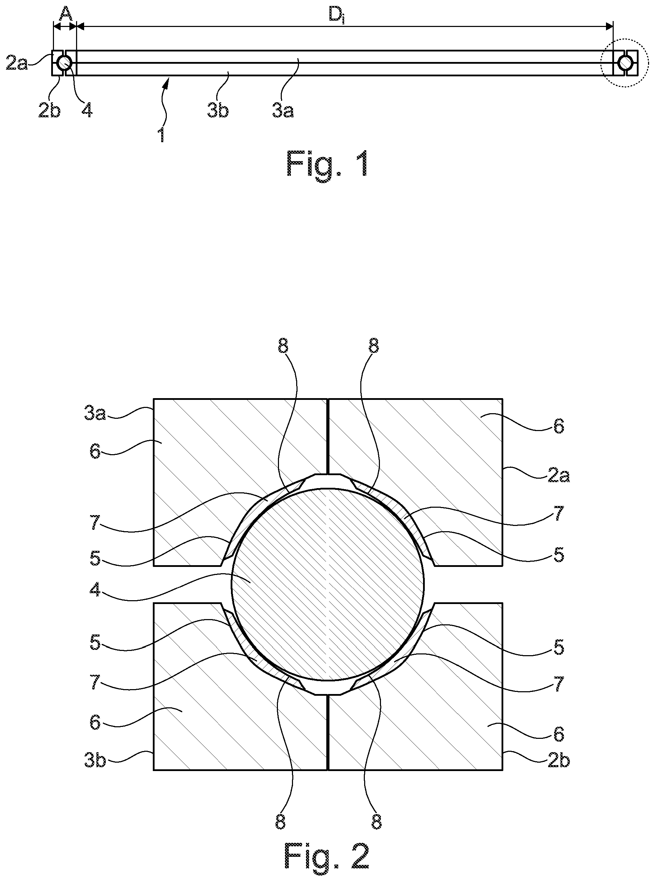

Figur 1 zeigt einen Schnitt durch ein Dünnringlager 1 mit einem geteilten Außenring 2a, 2b, einem geteilten Innenring 3a, 3b und Wälzkörpern 4. Der Innendurchmesser Dᵢ des geteilten Innenrings 3a, 3b ist größer als 1 m ausgebildet. Der Abstand A zwischen Innendurchmesser Dᵢ und dem Außendurchmesser des geteilten Außenringes 2a, 2b beträgt lediglich 30 mm, so dass sich hier ein Verhältnis aus A / Dᵢ von mindestens 1:34 ergibt. Der Querschnitt des Dünnringlagers 1 (siehe den mit einer gepunkteten Linie gekennzeichneten Bereich) ist in Figur 2 vergrößert dargestellt.

Figur 2 zeigt diesen vergrößerten Ausschnitt aus Figur 1. Gleiche Bezugszeichen wie in Figur 1 kennzeichnen gleiche Bauteile. Zu erkennen ist der geteilte Außenring 2a, 2b aus einem Grundwerkstoff 6 und mit den Laufbahnaufnahmeflächen 5. Weiterhin erkennbar ist der geteilte Innenring 3a, 3b aus einem Grundwerkstoff 6 und mit den Laufbahnaufnahmeflächen 5. Auf die Laufbahnaufnahmeflächen 5 sind jeweils die Funktionsschichten 7 aus einem Funktionsschichtmaterial aufgebracht. Dabei ist die Funktionsschicht 7 mit unterschiedlicher Funktionsschichtdicke über den Querschnitt einer Laufbahnaufnahmefläche 5 gesehen aufgebracht. Zudem bedeckt die Funktionsschicht 7 die jeweilige Laufbahnaufnahmefläche 5 nicht vollständig. So kann Funktionsschichtmaterial eingespart und die Kosten für das Dünnringlager 1 verringert werden.

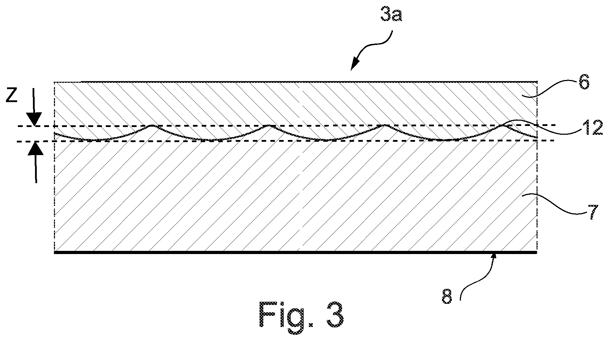

Figur 3 zeigt ein Schliffbild eines Schnitts durch die Funktionsschicht 7 und den angrenzenden Grundwerkstoff 6 des Innenrings 3a. Die Funktionsschicht 7 ist auf dem Grundwerkstoff 6 mittels Laserauftragsschweißens ausgebildet. Im Übergangsbereich 12, in welchem der Grundwerkstoff 6 mit der Funktionsschicht 7 verschmolzen ist, liegt eine wellige Struktur vor. Der Abstand Z zwischen dem Mittelwert der Wellenberge und dem Mittelwert der Wellentäler (siehe gestrichelte Linien) beträgt mindestens 50 µm. Die freie Oberfläche 8 der Funktionsschicht 7, welche dem Grundwerkstoff 6 abgewandt ist, ist hier schleifend und honend nachbearbeitet worden. Die freie Oberfläche 8 der Funktionsschicht 7 ist hier der Einfachheit halber eben dar, obwohl diese im Dünnringlager 1 eine Wölbung zur Aufnahme der Wälzkörper 4 in Form von Kugeln aufweist.

### Bezugszeichenliste

- 1: Dünnringlager
- 2a, 2b: Außenring
- 3a, 3b: Innenring
- 4: Wälzkörper
- 5: Laufbahnaufnahmefläche
- 6: Grundwerkstoff
- 7: Funktionsschicht
- 8: freie Oberfläche der Funktionsschicht
- 12: Übergangsbereich
- A: Abstand
- Dᵢ: Innendurchmesser

## Patentansprüche

1. Dünnringlager (1) umfassend mindestens einen Außenring (2a, 2b), mindestens einen Innenring (3a, 3b) und eine Mehrzahl kugelförmiger Wälzkörper (4), wobei der mindestens eine Innenring (3a, 3b) mit einem Innendurchmesser (Dᵢ) von größer als 700 mm ausgebildet ist, wobei der Innendurchmesser (Dᵢ) des mindestens einen Innenringes (3a, 3b) im Verhältnis zu einem Abstand A zwischen dem Innendurchmesser (Dᵢ) und einem Außendurchmesser des Dünnringlagers (1), in einem Querschnitt in axialer Richtung des Dünnringlagers (1) gesehen, ein Verhältnis von A/Dᵢ = 1:30 bis 1:150 aufweist, wobei der mindestens eine Innenring (3a, 3b) und der mindestens eine Außenring (2a, 2b) aus einem ungehärteten metallischen Grundwerkstoff (6) mit einer Härte kleiner 60 HRC gebildet sind, und wobei der mindestens eine Innenring (3a, 3b) und der mindestens eine Außenring (2a, 2b) jeweils eine Laufbahnaufnahmefläche (5) ausbilden, wobei der Grundwerkstoff (6) im Bereich der Laufbahnaufnahmeflächen (5) zumindest partiell mit einer Funktionsschicht (7) in einer Funktionsschichtdicke im Bereich von 0,5 bis 3 mm belegt ist, wobei die Funktionsschicht (7) aus einem metallischen Funktionsschichtmaterial mit einer Härte von mindestens 60 HRC gebildet ist, und wobei die Funktionsschichtdicke der Funktionsschicht (7) in dem Querschnitt gesehen in einer Richtung senkrecht zu der Laufbahnaufnahmefläche (5) unterschiedlich ausgebildet ist, derart dass die Funktionsschicht (7) die Laufbahnaufnahmefläche (5) nicht vollständig bedeckt und die Funktionsschichtdicke der Funktionsschicht (7) in der Richtung senkrecht zu der Laufbahnaufnahmefläche (5) zu ihren Randbereichen hin abnimmt.

2. Dünnringlager (1) nach Anspruch 1, wobei der metallische Grundwerkstoff (6) aus Stahl gebildet ist.

3. Dünnringlager (1) nach Anspruch 1 oder Anspruch 2, wobei das metallische Funktionsschichtmaterial aus Stahl der Sorte 1.3344 (X 130 WMoCrV 6-5-4-3) oder aus einem Hartmetall auf Basis von Wolframkarbid in einer Nickel-Bindematrix gebildet ist.

4. Dünnringlager (1) nach einem der Ansprüche 1 bis 3, wobei die Funktionsschicht (7) durch Laserauftragsschweißen auf den Grundwerkstoff (6) aufgebracht ist, wodurch ein im Schnitt gesehen welliger Übergangsbereich zwischen dem Grundmaterial (6) und der Funktionsschicht (7) ausgebildet ist.

5. Dünnringlager (1) nach einem der Ansprüche 1 bis 4, wobei eine freie Oberfläche (8) der Funktionsschicht (7), welche eine Laufbahn für die Wälzkörper (4) ausbildet, spanabhebend nachbearbeitet ist und/oder rolliert ist.

6. Dünnringlager (1) nach einem der Ansprüche 1 bis 5, wobei der mindestens eine Außenring (2a, 2b) und/oder mindestens eine Innenring (3a, 3b) wärmebehandelt ist.

7. Dünnringlager (1) nach einem der Ansprüche 1 bis 6, wobei die Laufbahnaufnahmeflächen (5) lediglich in einem Kontaktbereich zu den Wälzkörpern (4) mit der Funktionsschicht (7) belegt sind.

8. Dünnringlager (1) nach einem der Ansprüche 1 bis 7, wobei zwei Außenringe (2a, 2b) und/oder zwei Innenringe (3a, 3b) vorhanden sind.

9. Computertomograph, umfassend mindestens ein Dünnringlager (1) nach einem der Ansprüche 1 bis 8.

## Claims

1. A thin-ring bearing (1) comprising at least one outer ring (2a, 2b), at least one inner ring (3a, 3b) and a plurality of spherical rolling elements (4), wherein the at least one inner ring (3a, 3b) is designed to have an inner diameter (Dᵢ) that is greater than 700 mm, wherein the inner diameter (Dᵢ) of the at least one inner ring (3a, 3b), in relation to a distance A between the inner diameter (Dᵢ) and an outer diameter of the thin-ring bearing (1), as viewed in a cross-section in the axial direction of the thin-ring bearing (1), has a ratio of A/Dᵢ = 1:30 to 1:150, wherein the at least one inner ring (3a, 3b) and the at least one outer ring (2a, 2b) are formed from an unhardened metallic base material (6) with a hardness of less than 60 HRC, and wherein the at least one inner ring (3a, 3b) and the at least one outer ring (2a, 2b) each form a raceway receiving surface (5), wherein the base material (6) in the region of the raceway receiving surfaces (5) is at least partially covered with a functional layer (7) with a functional layer thickness in the range of 0.5 to 3 mm, wherein the functional layer (7) is formed from a metallic functional layer material with a hardness of at least 60 HRC, and wherein the functional layer thickness of the functional layer (7) varies in cross-section in a direction perpendicular to the raceway receiving surface (5), such that the functional layer (7) does not completely cover the raceway receiving surface (5) and the functional layer thickness of the functional layer (7) decreases in the direction perpendicular to the raceway receiving surface (5) towards its edge regions.

2. The thin-ring bearing (1) according to claim 1, wherein the metallic base material (6) is formed from steel.

3. The thin-ring bearing (1) according to claim 1 or claim 2, wherein the metallic functional layer material is made of steel of grade 1.3344 (X 130 WMoCrV 6-5-4-3) or of a hard metal based on tungsten carbide in a nickel binder matrix.

4. The thin-ring bearing (1) according to any one of claims 1 to 3, wherein the functional layer (7) is applied to the base material (6) by laser cladding, whereby a wavy transition area is formed between the base material (6) and the functional layer (7) in cross-section.

5. The thin-ring bearing (1) according to any one of claims 1 to 4, wherein a free surface (6) of the functional layer (7), which forms a raceway for the rolling elements (4), is finish-machined and/or burnished.

6. The thin-ring bearing (1) according to any one of claims 1 to 5, wherein the at least one outer ring (2a, 2b) and/or at least one inner ring (3a, 3b) is heat-treated.

7. The thin-ring bearing (1) according to any one of claims 1 to 6, wherein the raceway receiving surfaces (5) are only covered with the functional layer (7) in a contact region with the rolling elements (4).

8. The thin-ring bearing (1) according to any one of claims 1 to 7, wherein two outer rings (2a, 2b) and/or two inner rings (3a, 3b) are provided.

9. A computed tomography unit comprising at least one thin-ring bearing (1) according to any one of claims 1 to 8.

## Revendications

1. Roulement à section mince (1) comprenant au moins une bague extérieure (2a, 2b), au moins une bague intérieure (3a, 3b) et une pluralité d'éléments roulants (4) sphériques, l'au moins une bague intérieure (3a, 3b) étant formée avec un diamètre intérieur (Dᵢ) supérieur à 700 mm, le diamètre intérieur (Dᵢ) de l'au moins une bague intérieure (3a, 3b) présentant, par rapport à une distance A entre le diamètre intérieur (Dᵢ) et un diamètre extérieur du roulement à section mince (1), vu en coupe transversale dans la direction axiale du roulement à section mince (1), un rapport A/Dᵢ = 1:30 à 1:150, l'au moins une bague intérieure (3a, 3b) et l'au moins une bague extérieure (2a, 2b) étant constituées d'un matériau de base (6) métallique non trempé d'une dureté inférieure à 60 HRC, et l'au moins une bague intérieure (3a, 3b) et l'au moins une bague extérieure (2a, 2b) constituant respectivement une surface de réception de piste de roulement (5), le matériau de base (6) dans la plage des surfaces de réception de piste de roulement (5) étant au moins partiellement recouvert d'une couche fonctionnelle (7) d'une épaisseur de couche fonctionnelle dans la plage de 0,5 à 3 mm, la couche fonctionnelle (7) étant constituée d'un matériau de couche fonctionnelle métallique d'une dureté d'au moins 60 HRC, et l'épaisseur de couche fonctionnelle de la couche fonctionnelle (7), vue en coupe transversale dans une direction perpendiculaire à la surface de réception de piste de roulement (5), étant formée différemment, de telle sorte que la couche fonctionnelle (7) ne couvre pas complètement la surface de réception de piste de roulement (5) et de telle sorte que l'épaisseur de couche fonctionnelle de la couche fonctionnelle (7) diminue dans la direction perpendiculaire à la surface de réception de piste de roulement (5) vers ses plages de bordure.

2. Roulement à section mince (1) selon la revendication 1, dans lequel le matériau de base (6) métallique est constitué d'acier.

3. Roulement à section mince (1) selon la revendication 1 ou la revendication 2, dans lequel le matériau de couche fonctionnelle métallique est constitué d'acier de nuance 1.3344 (X 130 WMoCrV 6-5-4-3) ou d'un métal dur à base de carbure de tungstène dans une matrice de liaison à base de nickel.

4. Roulement à section mince (1) selon l'une des revendications 1 à 3, dans lequel la couche fonctionnelle (7) est appliquée sur le matériau de base (6) par rechargement par dépôt laser, ce qui forme une plage de transition ondulée vue en coupe, entre le matériau de base (6) et la couche fonctionnelle (7).

5. Roulement à section mince (1) selon l'une des revendications 1 à 4, dans lequel une surface libre (6) de la couche fonctionnelle (7), qui forme une piste de roulement pour les éléments roulants (4), est usinée par enlèvement de copeaux et/ou laminée.

6. Roulement à section mince (1) selon l'une des revendications 1 à 5, dans lequel l'au moins une bague extérieure (2a, 2b) et/ou l'au moins une bague intérieure (3a, 3b) sont traitées thermiquement.

7. Roulement à section mince (1) selon l'une des revendications 1 à 6, dans lequel les surfaces de réception de piste de roulement (5) ne sont recouvertes de la couche fonctionnelle (7) que dans une plage de contact avec les éléments roulants (4).

8. Roulement à section mince (1) selon l'une des revendications 1 à 7, dans lequel deux bagues extérieures (2a, 2b) et/ou deux bagues intérieures (3a, 3b) sont présentes.

9. Tomodensitomètre comprenant au moins un roulement à section mince (1) selon l'une des revendications 1 à 8.
